# EUROPÄISCHE PATENTSCHRIFT

(11) **EP 1 478 602 B1**
(45) Veröffentlichungstag und Bekanntmachung des Hinweises auf die Patenterteilung: **11.04.2007**
(21) Anmeldenummer: 03704572.1
(22) Anmeldetag: 07.02.2003
(51) Int. Cl.: C03B 27/00, C03B 29/00, C03C 23/00

(54) **GLAS MIT GEHÄRTETER OBERFLÄCHENSCHICHT UND VERFAHREN ZU SEINER HERSTELLUNG**
GLASS HAVING A HARDENED SURFACE LAYER AND METHOD FOR PRODUCING THE SAME
VERRE A COUCHE SUPERFICIELLE DURCIE ET PROCEDE PERMETTANT DE LE PRODUIRE

(30) Priorität: 13.02.2002 DE 10206082
(43) Veröffentlichungstag der Anmeldung: 24.11.2004
(73) Patentinhaber: CE-SYS GmbH Ilmenau, Computer und Elektronik Systemhaus, 98693 Ilmenau (DE)
(72) Erfinder: MIKOLASCHEK, Ralph, 98693 Ilmenau (DE); NASS, Michael, 98693 Martinroda (DE); POSPIECH, Jörg, 98693 Ilmenau (DE); TORNATI, Ferruccio, 61100 Pesaro (IT)
(74) Vertreter: Engel, Christoph Klaus
(86) Internationale Anmeldenummer: PCT/EP2003/001225
(87) Internationale Veröffentlichungsnummer: WO 2003/068698

(56) Entgegenhaltungen:
- EP-A- 0 577 260
- DE-A- 10 013 688
- US-A- 4 338 114
- CHEMICAL ABSTRACTS, vol. 115, no. 10, 9. September 1991 (1991-09-09) Columbus, Ohio, US; abstract no. 197542g, "CHEMICAL ABSTRACTS + INDEXES, AMERICAN CHEMICAL SOCIETY. COLUMBUS, US" XP000388873 & BELOUS, K.P. ET. AL.: "Thermal effect of laser light on the compressive and bending strengths of glass and china" PROBL. PROCHN., Nr. 1, 1991, Seiten 68-72,

## Beschreibung

Die vorliegende Erfindung betrifft ein Glasmaterial mit einer gehärteten Oberflächenschicht, in welcher veränderte Materialspannungen zur Erhöhung der mechanischen Festigkeit erzeugt sind, wobei die Festigkeit der Oberflächenschicht höher als die einer Kernschicht ist. Außerdem betrifft die vorliegende Erfindung ein Verfahren zum Härten von Glas.

Im Stand der Technik werden gelegentlich Gläser mit Hilfe von Laserstrahlung erwärmt. Beispielsweise ist aus der EP 0 196 730 A1 ein Verfahren und eine Anordnung zum Ausheilen von Beschädigungen der Oberfläche von Mehrwegflaschen bekannt. Dazu muss die gesamte Flasche auf eine Temperatur im Bereich des Transformationspunktes gebracht werden, woraufhin mit dem Laserstrahl die beschädigten Bereich bestrahlt und dadurch weiter erwärmt werden. Dies führt zu einer Ausheilung kleiner Beschädigungen. Letztlich kommt dieses Verfahren einem Polieren der Glasoberfläche durch Erwärmung über den Erweichungspunkt hinaus gleich. Der Gesamtenergieaufwand ist auch durch die notwendige Erwärmung der gesamten Flasche unwirtschaftlich hoch.2

In der Deutschen Offenlegungsschrift DE 27 09 105 A1 ist eine Sicherheitsglasscheibe und ein Verfahren zu ihrer Herstellung beschrieben. In dieser speziellen Sicherheitsglasscheibe sind Bereiche mit unterschiedlich starken Druck- und Zugspannungen in den Oberflächen- und Kernschichten vorgesehen, um ein vorbestimmtes Bruchverhalten zu realisieren. Die gewünschten Materialspannungen werden dabei in üblicher Weise durch Erhitzen der gesamten Glasscheibe auf eine Temperatur in der Nähe des Umwandlungspunktes des Glases und anschließendes rasches Abschrecken der Glasscheibe erzeugt. Aus dieser Druckschrift ist es auch bekannt, dass vorgespannte Glasscheiben beispielsweise in Kraftfahrzeugen als Sicherheitsscheiben eingesetzt werden, wobei die minimale Dicke dieser Glasscheiben üblicherweise zwischen 4,0 mm und 6,0 mm liegt.

Durch spezielle Vorschriften sind die Eigenschaften von Sicherheitsgläsern definiert und zumeist auch normiert, wobei eine dafür relevante Größe die Anzahl der Bruchstücke pro Fläche und die Bruchstückform ist, welche bei der Zerstörung des Sicherheitsglases entstehen (DIN-EN 12150 und DIN 1249).
Soweit nachfolgend gehärtetes Glas beschrieben ist, kann es sich generell auch um Sicherheitsglas oder teilvorgespanntes Glas handeln.

Ein Hauptproblem bei der Oberflächenhärtung von Glasscheiben besteht darin, dass zur Erwärmung des Glases sehr viel Energie eingesetzt werden muss, um die notwendigen Umwandlungstemperaturen zu erreichen, die je nach verwendeter Glassorte bei etwa 500 bis 600°C liegen. Da die Glasscheibe vollständig erwärmt werden muss, ist viel Energie erforderlich.

Die erwünschten Materialspannungen entstehen nur, wenn während der Härtebehandlung ein nennenswerter Temperaturgradient zwischen den Oberflächenschichten und der Kernschicht besteht. Dies hat auch zur Folge, dass die Oberflächenhärtung nur bei dickeren Glasscheiben möglich ist, da Druckspannungen in minimal möglichen Oberflächenschichten durch Zugspannungen im Inneren des Materials kompensiert werden müssen. Bei herkömmlichen Verfahren werden minimale Oberflächenschichten von etwa 500 µm ausgebildet, wobei die Kernschicht etwa 2/3 der Materialdicke umfasst. Heutzutage ist es daher noch nicht möglich, Sicherheitsglasscheiben mit einer Dicke kleiner 2 mm zu erzeugen. Andererseits besteht beispielsweise in der Kraftfahrzeugtechnik der Bedarf, dünnere Glasscheiben zu verwenden, um das Gewicht dieser Glasscheiben zu reduzieren. Insbesondere ist eine Gewichtseinsparung bei der Herstellung von Mehrscheibensicherheitsgläsern interessant, die aus mindestens zwei miteinander verklebten, gehärteten Glasscheiben hergestellt werden.

In der Europäischen Patentanmeldung EP 1 112 974 A2 ist ein Verfahren zum Herstellen von vorgespannten oder gebogenen Gläsern beschrieben. Demnach soll eine Glastafel unter Verwendung eines Laserstrahls auf das gewünschte Maß zugeschnitten werden, bevor das Härten der Glasscheibe erfolgt. Der Laserstrahl wird zum Schneiden der Glasscheiben oder zum Anritzen der Oberfläche verwendet, woraufhin die Glasscheibe an den geritzten Kanten gebrochen wird. Der Druckschrift ist auch entnehmbar, dass der eigentliche Härtevorgang erst nach dem Zuschneiden durchgeführt werden darf. Es ist allgemein bekannt, dass gehärtetes Glas mechanisch kaum noch bearbeitet werden kann, so dass Bearbeitungsvorgänge wie Bohren und Schneiden vor dem Härten ausgeführt werden müssen.

Die Europäische Patentanmeldung EP 0 062 814 A1 zeigt eine Vorrichtung zum Härten von Glasflächen. Es erfolgt wiederum eine vollständige Erwärmung des gesamten Glasmaterials, wobei besondere Vorkehrungen getroffen werden müssen, um auch Gläser mit nicht ebenen Oberflächengestaltungen möglichst gleichmäßig härten zu können.

Aus der DE 43 05 107 A1 ist ein Verfahren und eine Vorrichtung zum Schneiden eines spröden Körpers mit Laserstrahlung bekannt. Der Druckschrift kann entnommen werden, dass eine Laserstrahlung auch bei Glas eingesetzt werden kann, um Schneidvorgänge durchzuführen. Mit dem Laserstrahl erfolgt eine starke Erwärmung entlang der Schnittlinie, wobei die erzeugten Materialspannungen zum Bruch des Körpers entlang dieser Schnittlinie führen. Um gute Schneidergebnisse zu erzielen wird es dabei angestrebt, entlang der Schnittlinie eine Volumenerwärmung zu erreichen, die möglichst auch tiefer liegende Schichten des Materials erreicht.

In ähnlicher Weise wird gemäß der DE 199 63 865 A1 verfahren, um vorgespannte Gläser herzustellen. Auch hier wird der Laserstrahl zum Zuschneiden benutzt. Die auf das gewünschte Maß zugeschnittene Glastafel wird erst danach in herkömmlicher Weise vorgespannt, indem eine Volumenerwärmung des Materials erfolgt.

Aus der DE 100 35 573 A1 ist weiterhin ein Verfahren zum Herstellen eines gehärteten Glaskörpers bekannt. Dazu wird der Rohkörper vollständig bis auf eine Temperatur oberhalb des Transformationspunktes des betreffenden Glases aufgeheizt, um nach anschließender Abkühlung eine Härteerhöhung zu erzielen.

Aus dem umfangreichen Stand der Technik kann kein Verfahren entnommen werden, bei welchem auf eine Volumenerwärmung des Glasmaterials beim Ausführen von Härtevorgängen verzichtet werden könnte.

Zwar ist es beispielsweise aus der DE 42 18 903 A1 bekannt, einen Laserstrahl zum Härten der Oberfläche von metallischen Schichten einzusetzen. Allerdings beschränkt sich die Anwendung der Laserstrahlung in Härtevorrichtungen auf metallische, allenfalls keramische Materialien mit hoher Absorptionsrate. Die Fachwelt geht bislang einhellig davon aus, dass das Härten von Glas nur durch eine vollständige Materialerwärmung und anschließende schnelle Abkühlung möglich ist.

Auch nach dem in der DE 199 48 655 C1 beschriebenen Verfahren zur Herstellung von Glas- und Glaskeramikplatten mit erhöhter thermischer Beständigkeit erfolgt eine Volumenerwärmung der gesamten Glasplattendicke. Die Erwärmung lässt sich durch den Einsatz einer Mikrowellenstrahlung auf bestimmte Bereiche begrenzen. Eine wie bei der Laserstrahlung erreichbare Konzentration der Mikrowellenstrahlung ist allerdings nicht möglich, da eine Absorption der Strahlung durch das gesamte Material erfolgt.

Die EP 0 577 260 A2 erläutert ein Verfahren zur Behebung eines Oberflächendefekts, beispielsweise an Glasoberflächen-Beschädigte. Oberflächenbereiche einer transparenten Oberfläche können dabei durch materialabtragende Bestrahlung mit einem Laserstrahl wieder geglättet werden. Mit dieser Bestrahlung werden einzelne Partikel im beschädigten Oberflächenbereich entfernt, um eine im Wesentlichen glatte Oberfläche zu erzielen. Die Laserbearbeitungsvorrichtung kann während der Bearbeitung angepasst werden, um den Laserstrahl nachfolgend auf unterschiedliche Abschnitte der Oberfläche zu richten.

Eine Aufgabe der vorliegenden Erfindung besteht somit darin, den Härteprozess so zu steuern, dass in dessen Ergebnis ein gehärtetes Glas zur Verfügung steht, dessen Bruchstruktur vorherbestimmt ist, so dass ein von Sicherheitsnormen gefordertes Bruchverhalten gezielt eingestellt werden kann und zwar insbesondere ein nach den o.g. Normen gefordertes Bruchverhalten.

Eine Teilaufgabe der Erfindung wird darin gesehen, den Härtevorgang lokal zu begrenzen, so dass ein Glas mit einer lokal gehärteten Oberflächenschicht entsteht, um beispielsweise in den nicht gehärteten Bereichen auch nach dem Härtevorgang noch mechanische Bearbeitungen des Glases durchführen zu können.

Eine weitere Teilaufgabe der Erfindung besteht darin, ein Glas mit einer gehärteten Oberflächenschicht bereitzustellen, wobei die gehärtete Oberflächenschicht ohne Volumenerwärmung des Glasmaterials erzeugt werden soll, um dadurch den erforderlichen Energieeinsatz drastisch zusenken. Die erzielbaren Härtegrade sollen denjenigen der bekannten Gläser mit gehärteten Oberflächen entsprechen.

Diese und weitere Aufgaben werden durch das erfindungsgemäße Glas gelöst, welches im angefügten Anspruch 1 näher definiert ist.

Durch die Erfindung wurde überraschend und in Abkehr von den gefestigten Auffassungen der Fachwelt herausgefunden, dass Laserstrahlung auch zum Härten von Glas eingesetzt werden kann.

Der wesentliche Vorteil dieses Glases besteht darin, dass zu seiner Herstellung deutlich geringere Energiemengen benötigt werden, als für die Herstellung von gewöhnlich gehärtetem Glas. Außerdem ist es vorteilhaft, dass durch die nur lokale Bestrahlung der Glasoberfläche die Bereiche genau definiert werden können, in denen erwünschte Materialspannungen erzeugt werden, um den Härtegrad der Oberfläche zu erhöhen. Dabei ist es möglich, die Größe und den Verlauf der Materialspannungen relativ exakt vorherzubestimmen, so dass definierte Bruchzonen ausgebildet werden können. Dies ist bei der Herstellung von Sicherheitsglas besonders zweckmäßig. Bei erfindungsgemäßen Sicherheitsgläsern können beispielsweise Bereiche mit unterschiedlichem Bruchverhalten erzeugt werden, wenn dies für die spezielle Anwendung gewünscht wird.

Gemäß einer vorteilhaften Ausführungsform ist die gehärtete Oberflächenschicht im Minimum etwa 30 µm bis 300 µm dick. Auf diese Weise können sehr dünne gehärtete Gläser hergestellt werden. Die Gesamtdicke der erfindungsgemäßen gehärteten Gläser kann erstmals auch unter 2 mm liegen.

Eine bevorzugte Ausführungsform besitzt zwei sich gegenüberliegende gehärtete Oberflächenschichten, zwischen denen die Kernschicht eingeschlossen ist. Es ist insbesondere möglich, dass das erfindungsgemäße gehärtete Glas auch Abschnitte besitzt, in denen die gehärtete Oberfläche nicht eben ist. Es sind nahezu beliebige dreidimensionale Formgebungen möglich, so dass beispielsweise auch bei Hohlkörpern eine Härtung der Oberfläche des Glases erfolgen kann.

Weiterhin ist es vorteilhaft, wenn bei einer speziellen Ausführungsform einzelne Abschnitte der Oberfläche nicht mit Laserstrahlung bestrahlt werden und somit nicht gehärtet sind. In diesen Bereichen kann nach dem Härtevorgang eine mechanische Bearbeitung erfolgen, beispielsweise durch Bohren oder Schleifen. Ebenso ist es möglich, sowohl in gehärteten als auch in nicht gehärteten Abschnitten des Glases eine Oberflächenstruktur unter Verwendung der Laserstrahlung aufzubringen, z.B. wenn Beschriftungen auf der Glasoberfläche erwünscht sind.

Besonders bevorzugt sind Ausführungsformen, die die Anforderungen an Sicherheitsglas, insbesondere Einscheibensicherheitsglas, erfüllen.

Schließlich besteht eine weitere Aufgabe der Erfindung darin, ein verfahren zum Bearbeiten von Glas anzugeben, welches eine drastische Energieeinsparung bei einer zielgerichtete Härtung vorbestimmter Oberflächenbereiche ermöglicht und welches die gezielte Vorbestimmung von Bruchlinien im Glas gestattet.

Erfindungsgemäß wird zur Lösung dieser Aufgabe ein Verfahren zum Härten von Glas angegeben, dessen wesentliche Schritte im beigefügten Anspruch 8 angegeben sind. Damit ist es möglich, die benötigte Energie zur Erwärmung der Glasoberfläche gezielt einzubringen. Durch die Auswahl geeigneter Parameter der Laserstrahlung erfolgt die Erwärmung des Glases nur in den außenliegenden Oberflächenschichten, so dass der erwünschte Temperaturgradient zwischen der Kernschicht und der Oberflächenschicht besonders groß gehalten werden kann. Gleichzeitig muss bei der notwendigen schnellen Abkühlung nicht so viel Wärmeenergie abtransportiert werden, wie es bei herkömmlichen Härteverfahren der Fall ist. Die Abkühlung erfolgt somit schneller und mit weniger Energieeinsatz für die Bereitstellung des Kühlmediums.

Es ist vorteilhaft, wenn die Laserstrahlung während des Härtevorgangs linienförmig über die Glasoberfläche geführt wird. Dadurch lassen sich spezielle Bruchstrukturen in der gehärteten Oberflächenschicht erzeugen, durch die das Bruchbild in der gewünschten Weise eingestellt werden kann.

Zweckmäßigerweise wird bei dem Verfahren eine Laserstrahlung mit dosierbarer Leistungsdichte verwendet. Die Leistungsdichte wird dabei so eingestellt, dass eine Erwärmung bis zur Glasumwandlungstemperatur nur in einer minimalen Materialtiefe von etwa 30µm bis 300 µm erfolgt. Andererseits kann durch den nicht tiefen Energieeintrag eine weitere Einsparung von Energie erfolgen.

Bei einer zweckmäßigen Ausführungsform des erfindungsgemäßen Verfahrens wird ein CO₂-Laser zur Erzeugung der Laserstrahlung verwendet. Dieser kann eine kontinuierliche oder eine gepulste Laserstrahlung abgeben. Untersuchungen haben gezeigt, dass bei der Verwendung eines geeignet eingerichteten CO₂-Lasers etwa 80% der durch die Strahlung bereitgestellten Energie in den oberen ca. 20 µm des bestrahlten Glases absorbiert werden, während die verbleibenden 20% reflektiert werden.

Eine abgewandelte Ausführungsform nutzt einen YAG-Laser, dessen Wellenlänge in einem bei Glas transparenten Bereich liegt. Die bereitgestellte Strahlung wird zu etwa 10% reflektiert und zu etwa weiteren 10% absorbiert. 80% der von einem solchen Laser emittierten Strahlung durchdringen das Glas (Transmission). Damit ist es möglich, die für den Härtevorgang benötigten Spannungsstrukturen auch in tieferen Materialschichten einzubringen. Zur besseren Energieausnutzung kann das zu härtende Glas zwischen einem Vollspiegel und einem halbdurchlässigen Spiegel angeordnet werden, so dass der Laserstrahl an den Spiegeln reflektiert wird und das Glas mehrfach durchdringt. Die jeweils zu verwendende Laserstrahlung wird an das spezielle Material und die gewählte Dicke des zu härtenden Glases angepasst.

Gemäß einer weiteren Abwandlung ist es möglich, das Glas vor der Bestrahlung auf eine Temperatur deutlich unterhalb der Glasumwandlungstemperatur vorzuwärmen. Auf diese Weise können bei besonders empfindlichen Glassorten unerwünschte Materialspannungen reduziert werden. Allerdings erhöht sich dabei die notwendige Bearbeitungsenergie.

Weitere Vorteile, Einzelheiten und Weiterbildungen der vorliegenden Erfindung ergeben sich aus der nachfolgenden Beschreibung bevorzugter Ausführungsformen, unter Bezugnahme auf die Zeichnung. Es zeigen:
- Fig. 1: eine Bruchstruktur in einem gehärteten Glas gemäß dem Stand der Technik;
- Fig. 2: eine beispielhafte Bruchstruktur in einem erfindungsgemäßen Glas mit gehärteter Oberflächenschicht;
- Fig. 3: einen Ablaufplan eines erfindungsgemäßen Verfahrens zum Härten von Glas;
- Fig. 4: eine Momentaufnahme des Wärmetransportstroms in Glas beim Härtevorgang mit einem YAG-Laser.

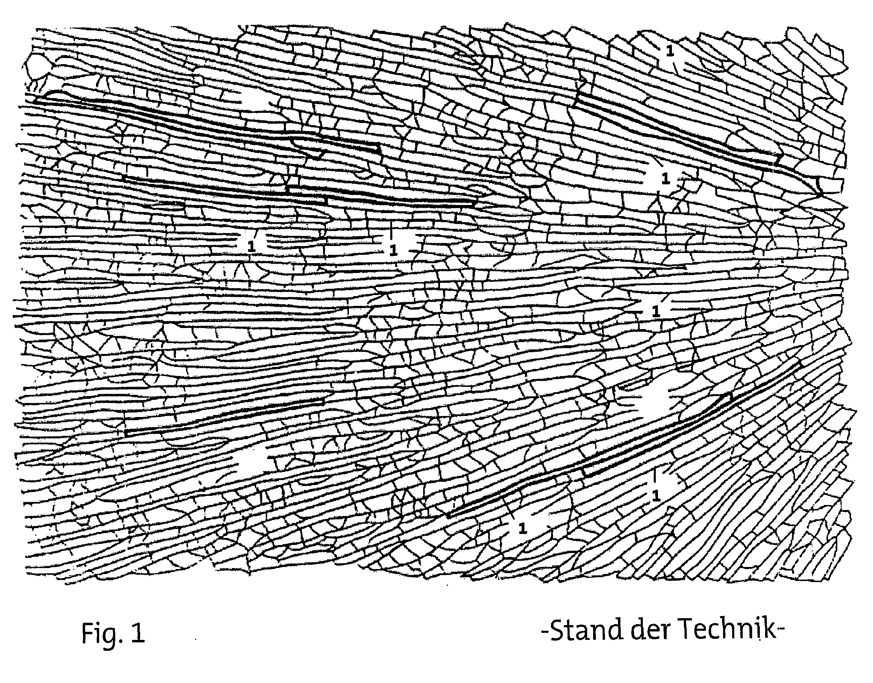

Fig. 1 zeigt eine schematische Darstellung einer Bruchstruktur in einem gehärteten Glas gemäß dem Stand der Technik. Durch dargestellte Bruchlinien 1 werden die Bruchkanten verdeutlicht, die bei einem gehärteten Glas bestehen, welches beispielhaft in der oben genannten DE 27 09 105 A1 gezeigt wird. Durch die volumenmäßige Erwärmung des gesamten Glases und die nachfolgende schnelle Abkühlung der Glasoberfläche entstehen in der Oberflächenschicht Druckspannungen, die eine erhöhte Härte der Oberfläche zur Folge haben und bei geeigneter Dimensionierung zu einer speziellen Bruchstruktur führen. Bei der übermäßigen Belastung von gehärtetem Glas zerspringt dieses in eine große Anzahl relativ kleiner Bruchstücke. Den durch die Materialerwärmung und die nachfolgende schnelle Abkühlung ausgebildeten Druckspannungen in der Oberflächenschicht wirken im Inneren (in der Kernschicht) Zugspannungen entgegen.

Je nachdem, wie stark die Druck- und Zugspannungen im Glas sind und welche Bruchstruktur ausgebildet ist, werden diese gehärteten Gläser auch als Einscheibensicherheitsglas (ESG) bzw. teilvorgespanntes Glas (TVG) bezeichnet.

Durch die vollständige Erwärmung des Glasmaterials in entsprechenden Öfen ist es nicht möglich, einzelne Bereiche vom Härteprozess auszuschließen. In beschränktem Umfang kann lediglich die Verteilung der Bruchstruktur durch unterschiedliches Abkühlen in gewissen Bereichen beeinflusst werden. Aus der Fig. 1 ist auch erkennbar, dass aufgrund der kaum zu steuernden Ausbildung der durch herkömmliche Verfahren erzeugten Materialspannungen auch Bruchstücke mit relativ scharfen Kanten und spitzen Formen sowie teilweise unerwünscht große Bruchstücke auftreten können, wenn das herkömmlich gehärtete Glas zerstört wird. Solche Bruchstücke können in Unfallsituationen zu Verletzungen führen.

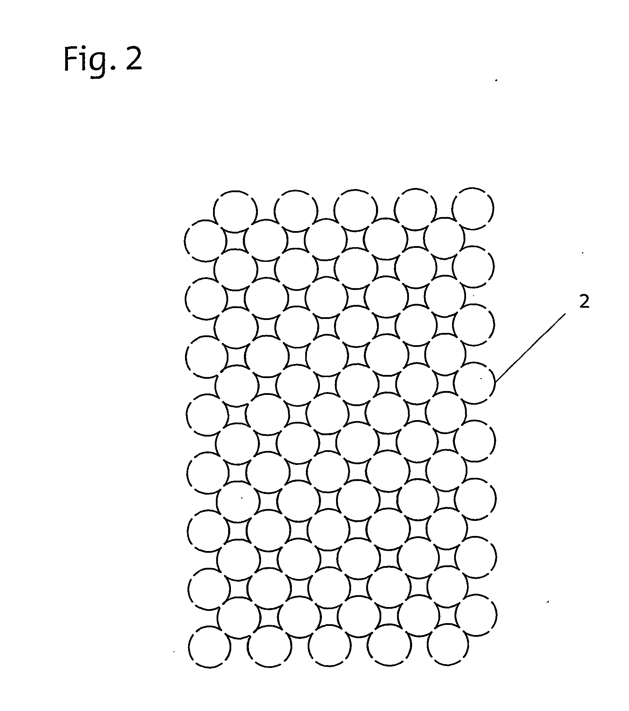

Fig. 2 zeigt eine schematische Darstellung einer beispielhaften Bruchstruktur in einem erfindungsgemäßen gehärteten Glas. Anstelle der gezeigten Struktur können auch andere, beispielsweise einfache Gitterstrukturen gewählt werden. Die dargestellten regelmäßigen Bruchlinien 2 verdeutlichen die Möglichkeit der gezielten Beeinflussung des Verlaufs dieser Bruchlinien. Die Bruchlinien werden erfindungsgemäß dadurch erzeugt, dass ein Laserstrahl entlang einer vorbestimmten Bahn auf die Oberfläche des zu härtenden Bereichs des Glases gerichtet wird. Dabei ist es möglich, den Laserstrahl mit relativ starker Bündelung auf die Glasoberfläche zu richten, um eine eng begrenzte lokale Erwärmung des Materials bis zur Glasumwandlungstemperatur (500-600°C) zu erzielen.

Bei abgewandelten Ausführungsformen wird der Laserstrahl mit einer größeren Auftrefffläche auf die Glasoberfläche gerichtet, um den erwärmten Bereich zu vergrößern. Auf diese Weise können verschiedenste Bruchstrukturen erzeugt werden, in Abhängigkeit von den ausgewählten Positionen der lokal begrenzten Erwärmung des Materials.

Bei herkömmlichem Glashärten mit einer Volumenerwärmung des gesamten Materials entstehen anfangs Zugspannungen in den Oberflächenbereichen, die sich aufgrund der schnelleren Abkühlung der Materialoberfläche gegenüber dem Kernbereich dann in Druckspannungen umwandeln. Durch die erfindungsgemäße lokale Konzentration des Energieeintrags durch die Laserstrahlung in das Glas - sowohl bezogen auf die bestrahlte Fläche als auch bezogen auf die Eindringtiefe in das Material - können die Härteprozesse nun an das gewünschte Ergebnis exakt angepasst werden. Je nach Wahl der Laserstrahlung können Spannungsbereiche direkt an der Oberfläche erzeugt werden, indem eine strukturierte lokale Oberflächenerwärmung erfolgt. Bei einer lokal begrenzten, einer vorgegebenen Strukturlinie folgenden Erwärmung der gesamten Materialdicke werden die Spannungen auch in den Kernbereichen des Materials entstehen, bezogen auf die benachbarten Bereiche, die durch die Laserstrahlung nicht erwärmt wurden.

Die in Fig. 2 gezeigte Struktur dient lediglich als Beispiel. Beliebige andere definierte Bruchstrukturen lassen sich erfindungsgemäß erzeugen. Die Bruchstruktur kann wie in Fig. 2 gezeigt ist, gleichmäßig auf der Glasoberfläche verteilt sein. Dies führt zu einer gleichmäßigen Oberflächenhärte und im Bruchfall zu einer exakt vorhersehbaren Zersplitterung der Glasscheibe, wie dies in den o.g. Normen gefordert wird.

Bei abgewandelten Ausführungsformen können einzelne Bereiche einer Glasoberfläche mehr oder weniger mit der Laserstrahlung bearbeitet werden, so dass die erzielte Oberflächenhärte unterschiedlich ist. Beispielsweise können bestimmte Abschnitte vollständig von der Härtebehandlung ausgenommen werden, wenn in diesen Bereichen nach Durchführung des Härteprozesses noch eine mechanische Bearbeitung erfolgen soll.

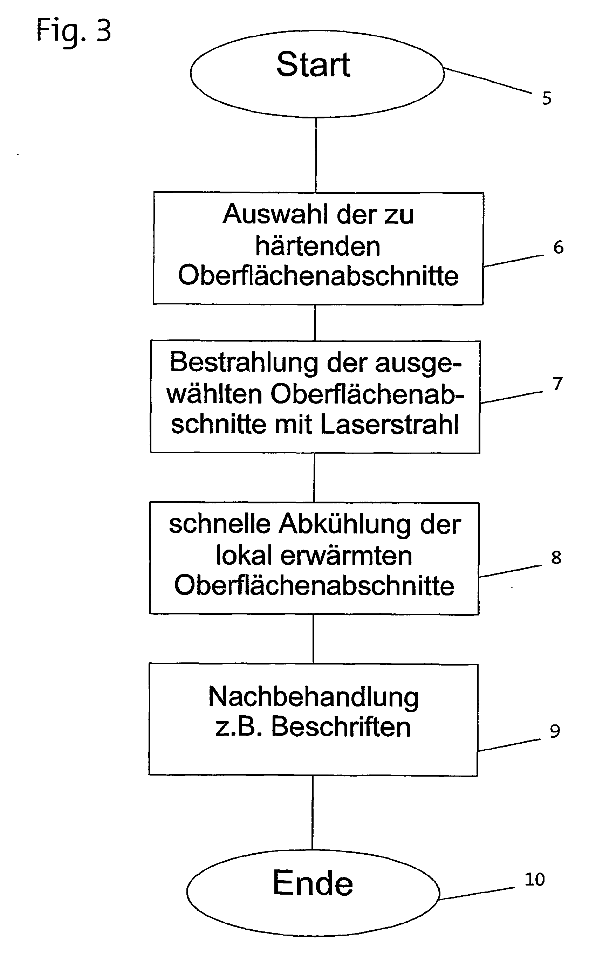

Fig. 3 zeigt in einem Ablaufplan die wesentlichen Schritte des erfindungsgemäßen Verfahrens zum Härten von Glas. Das Verfahren startet im Schritt 5. Im Schritt 6 erfolgt die Auswahl der zu härtenden Oberflächenabschnitte, wobei insbesondere eine softwaregestützte Bahnsteuerung einer Laserbearbeitungsvorrichtung vorgenommen wird. Im nachfolgenden Schritt 7 werden die ausgewählten Oberflächenabschnitte mit einem Laserstrahl bestrahlt. Dazu können vorzugsweise CO₂-Laser oder YAG-Laser verwendet werden. Die Leistungsdichte des Laserstrahls wird so eingestellt, dass in der Oberflächenschicht oder auch in tieferen Materialschichten eine Erwärmung bis zur Glasumwandlungstemperatur möglich ist. Die Laserstrahlung kann beispielsweise eine Wellenlänge von etwa 10,6 µm besitzen. Die Wellenlänge wird beispielsweise so ausgewählt, dass das jeweilige Glasmaterial zu einer Resonanzschwingung angeregt wird, um in den Oberflächenbereichen bei sehr geringer Eindringtiefe des Laserstrahls eine hohe Absorptionsrate zu ermöglichen.

Auch die sonstigen Prozessparameter der Laserstrahlung können beeinflusst werden, um eine optimale lokal begrenzte Erwärmung der Oberflächenschicht oder der tieferen Materialschichten (je nach gewünschter Struktur) bei geringst möglichem Energieeinsatz zu erzielen. Es hat sich gezeigt, dass bei der Durchführung des erfindungsgemäßen Verfahrens Glas mit etwa 1/10 und weniger des Energieeinsatzes herkömmlicher Verfahren gehärtet werden kann.

Die Laserstrahlung kann ohne weiteres auf beliebige Oberflächenformen gerichtet werden. Damit ist es möglich, auch nicht ebene Oberflächen zu härten. Der Laserstrahl kann durch eine gesteuerte Optik oder durch einen bewegten Werkzeugkopf an die gewünschte Position auf der zu härtenden Oberfläche gebracht werden. Es kann ein kontinuierlicher oder ein gepulster Laserstrahl auf die Glasoberfläche gerichtet werden. Natürlich ist es auch möglich, gleichzeitig die obere und die untere Oberfläche eines Glaskörpers mit der Laserstrahlung zu behandeln und dadurch zu härten.

Bei speziellen Gläsern kann es vorteilhaft sein, eine absorbierende Beschichtung auf die Oberfläche aufzubringen, um die Wirkung der Laserstrahlung zu verbessern.

Im Schritt 8 werden die durch die Laserstrahlung lokal erwärmten Oberflächenabschnitte schnell (schockartig) abgekühlt, um die gewünschten Druck- und Zugspannungen zu erzeugen. Als Kühlmedium können geeignete Gase oder Flüssigkeiten eingesetzt werden, die beispielsweise über eine Strahldüse zugeführt werden, welche ebenfalls am Laserstrahl-Werkzeugkopf befestigt sein kann.

Im Schritt 9 kann bei Bedarf eine Nachbehandlung des gehärteten Glases durchgeführt werden. Unter Verwendung der Laserbearbeitungsvorrichtung können die gehärteten Gläser auch beschriftet werden. Das Verfahren endet im Schritt 10.

Bei abgewandelten Ausführungsformen kann das Glas vor, während oder nach dem eigentlichen Härteprozess beispielsweise auf etwa 200°C erwärmt werden, um unerwünschte Materialspannungen auszugleichen.

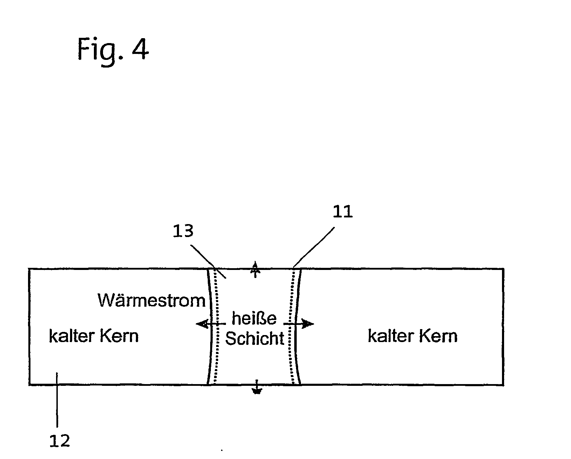

Fig. 4 zeigt eine Momentaufnahme des Wärmetransportstroms in Glas beim Härtevorgang mit einem YAG-Laser. Auf einen vorbestimmten Oberflächenbereich 11 einer Glasscheibe 12 trifft eine Laserstrahlung auf. Die von dem YAG-Laser emittierte Strahlung wird von der Glasscheibe 12 weniger stark absorbiert, so dass der Energieeintrag auch in tiefere Materialschichten erfolgt. Eine sich ausbildende heiße Schicht 13 besitzt damit eine größere Dicke und kann ggf. die gesamte Glasscheibe 12 in einem lokal begrenzten Bereich durchdringen. Der Wärmestrom in den angrenzenden kalten Materialkern entsteht somit in tieferen Schichten, so dass dort Materialspannungen auftreten, die zur Materialhärtung führen.

Weitere Abwandlungen und Anpassungen des erfindungsgemäßen Verfahrens sind möglich, um durch Laserstrahlung gehärtetes Glas zu erzeugen.

## Patentansprüche

1. Glas mit einer zumindest lokal gehärteten Oberflächenschicht, in welcher veränderte Materialspannungen zur Erhöhung der lokalen mechanischen Festigkeit und/oder zur Herausbildung eines vorbestimmten Bruchbildes erzeugt sind, wobei die Festigkeit in der Oberflächenschicht lokal höher als die einer Kernschicht ist, hergestellt durch folgende Verfahrensschritte:
a) Vorbestimmung einer Strukturlinie auf der Oberfläche des zu härtenden Bereiches des Glases;
b) gesteuerte lokale Bestrahlung der Glasoberfläche mit einer Laserstrahlung und lokal begrenzte Erwärmung bis zur Glasumwandlungstemperatur entlang dieser vorbestimmten Strukturlinie, zur Erzeugung von vorbestimmten Bruchlinien:
c) schnelle Abkühlung der lokal erwärmten Oberflächenabschnitte.

2. Glas nach Anspruch 1 **dadurch gekennzeichnet, dass** die gehärtete Oberflächenschicht 30 bis 300 µm dick ist.

3. Glas nach Anspruch 1 oder 2, **dadurch gekennzeichnet, dass** die Kernschicht von zwei sich gegenüberliegenden gehärteten Oberflächenschichten eingeschlossen ist.

4. Glas nach einem der Ansprüche 1 bis 3, **dadurch gekennzeichnet, dass** zumindest Abschnitte der gehärteten Oberfläche nicht eben sind.

5. Glas nach einem der Ansprüche 1 bis 4, **dadurch gekennzeichnet, dass** die Materialspannungen so ausgewählt sind, dass es die Anforderungen für Sicherheitsglas erfüllt.

6. Glas nach einem der Ansprüche 1 bis 5, **dadurch gekennzeichnet, dass** es eine Gesamtdicke kleiner als 2 mm besitzt.

7. Glas nach einem der Ansprüche 1 bis 6, **dadurch gekennzeichnet, dass** einzelne Abschnitte der Oberfläche nicht mit der Laserstrahlung bestrahlt werden und somit nicht gehärtet sind.

8. Verfahren zum Härten von Glas und/oder zur gezielten Beeinflussung des Verlaufs von Bruchlinien in Glas, **gekennzeichnet durch** folgende verfahrensschritte:
a) Auswahl zu härtender Oberflächenabschnitte (6);
b) Vorbestimmung einer Strukturlinie auf der Oberfläche des ausgewählten Oberflächenabschnitts;
c) gesteuerte lokale Bestrahlung des ausgewählten Oberflächenabschnitts mit einer Laserstrahlung (7) und lokal begrenzte Erwärmung bis zur Glasumwandlungstemperatur entlang dieser vorbestimmten Strukturlinie, zur Erzeugung von vorherbestimmten Bruchlinien;
d) schnelle Abkühlung der lokal erwärmten Oberflächenabschnitte (8).

9. Verfahren nach Anspruch 8, **dadurch gekennzeichnet, dass** die Laserstrahlung linienförmig über die Glasoberfläche geführt wird.

10. Verfahren nach Anspruch 8 oder 9, **dadurch gekennzeichnet, dass** eine Laserstrahlung mit dosierbarer Leistungsdichte verwendet wird.

11. Verfahren nach Anspruch 10, **dadurch gekennzeichnet, dass** die Leistungsdichte so dosiert wird, dass eine Erwärmung bis zur Glasumwandlungstemperatur nur bis zu einer Materialtiefe von 30 bis 300 µm erfolgt.

12. Verfahren nach einem der Ansprüche 8 bis 11, **dadurch gekennzeichnet, dass** zur Erzeugung der Laserstrahlung ein CO₂-Laser verwendet wird.

13. Verfahren nach einem der Ansprüche 8 bis 12, **dadurch gekennzeichnet, dass** eine kontinuierliche oder gepulste Laserstrahlung verwendet wird.

14. verfahren nach einem der Ansprüche 8 bis 13, **dadurch gekennzeichnet, dass** zwei sich gegenüberliegende Glasoberflächen nacheinander oder gleichzeitig durch Bestrahlung behandelt werden.

15. Verfahren nach einem der Ansprüche 8 bis 14, **dadurch gekennzeichnet, dass** das Glas vor der Bestrahlung auf eine Temperatur unterhalb der Glasumwandlungstemperatur erwärmt wird.

16. Verfahren nach einem der Ansprüche 8 bis 15, **dadurch gekennzeichnet, dass** einzelne Abschnitte der, Oberfläche nicht mit Laserstrahlung bestrahlt werden und somit gehärtete und nicht gehärtete Bereiche auf der Glasoberfläche erzeugt werden.

17. Verfahren nach einem der Ansprüche 8 bis 16, **dadurch gekennzeichnet, dass** die Wellenlänge der Laserstrahlung so ausgewählt ist, dass für unterschiedliche Glasarten ein optimaler Absorptionskoeffizient erreicht wird.

18. Verfahren nach einem der Ansprüche 8 bis 17, **dadurch gekennzeichnet, dass** das gehärtete Glas nachbehandelt (9), insbesondere unter Verwendung der Laserbearbeitungsvorrichtung beschriftet wird.

## Claims

1. A glass comprising an at least locally hardened surface layer in which modified material stresses are produced to increase the local mechanical resistance and/or to form a predetermined breaking pattern, with the resistance in the surface layer being locally higher than the resistance in a core layer, said glass being produced with the following method steps:
a) predetermination of a structure line on the surface of the region of the glass, which is to be hardened;
b) controlled local exposure of the glass surface by means of a laser beam and locally limited heating until the glass transition temperature is reached along this predetermined structure line for the purpose of generating predetermined breaking lines;
c) rapid cooling of the locally heated surface sections.

2. The glass according to claim 1, **characterized in that** the hardened surface layer has a thickness of from 30 to 300 µm.

3. The glass according to claim 1 or 2, **characterized in that** the core layer is enclosed by two hardened surface layers located opposite to one another.

4. The glass according to one of claims 1. to 3, **characterized in that** at least sections of the hardened surface are not flat.

5. The glass according to one of claims 1 to 4, **characterized in that** the material stresses are chosen in such a manner that it fulfills the requirements for safety glass.

6. The glass according to one of claims 1 to 5, **characterized in that** it has a total thickness of less than 2 mm.

7. The glass according to one of claims 1 to 6, **characterized in that** individual sections of the surface are not exposed with the laser beam and are thus not hardened.

8. A method for hardening glass and/or systematically impacting the course of braking lines in glass, **characterized by** the following method steps:
a) selection of surface sections (6), which are to be hardened;
b) predetermination of a structure line on the surface of the selected surface section;
c) controlled local exposure of the selected surface section by means of a laser beam (7) and locally limited heating until the glass transition temperature is reached along this predetermined structure line for the purpose of generating predetermined breaking lines;
d) rapid cooling of the locally heated surface sections (8).

9. The method according to claim 8, **characterized in that** the laser beam is linearly guided across the glass surface.

10. The method according to claim 8 or 9, **characterized in that** a laser beam is used, which comprises a power density, which can be dosed.

11. The method according to claim 10, **characterized in that** the power density is dosed in such a manner that a heating until the glass transition temperature is reached is performed only up to a material depth of from 30 to 300 µm.

12. The method according to one of claims 8 to 11, **characterized in that** a CO₂ laser is used for generating the laser beam.

13. The method according to one of claims 8 to 12, **characterized in that** a continuous or pulsed laser beam is used.

14. The method according to one of claims 8 to 13, **characterized in that** two glass surfaces located opposite to one another are successively or simultaneously treated by means of exposure.

15. The method according to one of claims 8 to 14, **characterized in that**, prior to exposure, the glass is heated to a temperature below the glass transition temperature.

16. The method according to one of claims 8 to 15, **characterized in that** individual sections of the surface are not exposed by means of a laser beam and **in that** hardened and unhardened regions are thus generated on the glass surface.

17. The method according to one of claims 8 to 16, **characterized in that** the wavelength of the laser beam is chosen in such a manner that an optimal absorption coefficient is obtained for different types of glass.

18. The method according to one of claims 8 to 17, **characterized in that** the hardened glass (9) is post-treated, in particular labeled, using the laser processing device.

## Revendications

1. Verre avec une couche de surface trempée au moins localement, dans laquelle des tensions de matériau modifiées sont générées pour améliorer la résistance mécanique locale et/pour former une image de fracture prédéfinie, la résistance dans la couche de surface étant localement plus élevée que celle d'une couche centrale, fabriquée par les étapes de procédé suivantes :
a) prédétermination d'une ligne de structure sur la surface de la zone à tremper du verre ;
b) irradiation locale contrôlée de la surface du verre avec un rayonnement laser et réchauffement limité localement jusqu'à la température de transformation du verre le long d'une cette ligne de structure prédéterminée pour générer des lignes de fracture prédéfinies ;
c) refroidissement rapide des parties de surface réchauffées localement.

2. Verre selon la revendication 1, **caractérisé en ce que** la couche de surface trempée a une épaisseur de 30 à 300 µm.

3. Verre selon la revendication 1 ou 2, **caractérisé en ce que** la couche centrale est enfermée par deux couches de structure trempées et se faisant face.

4. Verre selon l'une quelconque des revendications 1 à 3,
**caractérisé en ce que** au moins des parties de la surface trempée ne sont pas planes.

5. Verre selon l'une quelconque des revendications 1 à 4,
**caractérisé en ce que** des tensions de matériau sont choisies de telle sorte que cela répond aux exigences pour le verre Sécurité.

6. Verre selon l'une quelconque des revendications 1 à 5,
**caractérisé en ce qu'**il présente une épaisseur globale inférieure à 2 mm.

7. Verre selon l'une quelconque des revendications 1 à 6,
**caractérisé en ce que** des parties individuelles de la surface ne sont pas irradiées avec le rayonnement laser et ne sont donc pas trempées.

8. Procédé pour tremper du verre et/ou pour influencer de façon ciblée l'allure des lignes de fracture dans le verre, **caractérisé par** les étapes de procédé suivantes :
a) sélection des parties de surface (6) à tremper,
b) prédéfinition d'une ligne de structure sur la surface de la partie de surface choisie ;
c) irradiation locale contrôlée de la partie de surface choisie avec un rayonnement laser (7) et réchauffement localement limité jusqu'à la température de transformation du verre le long de cette ligne de surface prédéfinie, pour générer des lignes de fracture prédéfinies,
d) refroidissement rapide des parties de surface (8) réchauffées localement.

9. Procédé selon la revendication 8, **caractérisé en ce que** le rayonnement laser est guidé en forme de ligne sur la surface de verre.

10. Procédé selon la revendication 8 ou 9, **caractérisé en ce qu'**un rayonnement laser avec une densité de puissance dosable est utilisé.

11. Procédé selon la revendication 10, **caractérisé en ce que** la densité de puissance est dosée de telle sorte qu'un réchauffement jusqu'à la température de transformation du verre n'intervient que jusqu'à une profondeur de matériau de 30 à 300 µm.

12. Procédé selon l'une quelconque des revendications 8 à 11,
**caractérisé en ce que** un laser à CO₂ est utilisé pour générer le rayonnement laser.

13. Procédé selon l'une quelconque des revendications 8 à 12,
**caractérisé en ce qu'**un rayonnement laser continu ou pulsé est utilisé.

14. Procédé selon l'une quelconque des revendications 8 à 13,
**caractérisé en ce que** deux surfaces de verre se faisant face sont traitées de façon successive ou simultanée par irradiation.

15. Procédé selon l'une quelconque des revendications 8 à 14,
**caractérisé en ce que** le verre est réchauffé avant l'irradiation à une température inférieure à la température de transformation du verre.

16. Procédé selon l'une quelconque des revendications 8 à 15,
**caractérisé en ce que** certaines parties de la surface ne sont pas irradiées avec un rayonnement laser et ainsi des zones trempées et non trempées sont générées sur la surface du verre.

17. Procédé selon l'une quelconque des revendications 8 à 16,
**caractérisé en ce que** la longueur d'onde du rayonnement laser est choisie de telle sorte qu'un coefficient d'absorption optimal est obtenu pour différents types de verre.

18. Procédé selon l'une quelconque des revendications 8 à 17,
**caractérisé en ce que** le verre trempé est réusiné (9), en particulier marqué en utilisant un dispositif d'usinage par laser.
